# EUROPEAN PATENT APPLICATION

(11) **EP 4 645 780 A1**
(43) Date of publication of application: **05.11.2025**
(21) Application number: 22969879.0
(22) Date of filing: 30.12.2022
(51) Int. Cl.: H04L 27/00

(54) **METHOD AND APPARATUS FOR ACQUIRING LABEL INFORMATION, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); SHI, Zhihua, Dongguan, Guangdong 523860 (CN); HUANG, Yingpei, Dongguan, Guangdong 523860 (CN)
(74) Representative: Penza, Giancarlo
(86) International application number: PCT/CN2022/144340
(87) International publication number: WO 2024/138739

(57) **Abstract**

Provided in the embodiments of the present disclosure are a method and apparatus for acquiring label information, and an electronic device. The method comprises: a first network device determining correction parameters; and the first network device determining, on the basis of the correction parameters, label information corresponding to each data in a data set, wherein the data set and the label information corresponding to each piece of data in the data set are used for training a first model.

## Description

### TECHNICAL FIELD

The embodiments of the present disclosure relate to the technical field of mobile communication, and particularly relate to a method and a device for acquiring label information, and a device and a storage medium.

### BACKGROUND

In view of the great success of Artificial Intelligence (AI) technology or Machine Learning (ML) in computer vision, natural language processing or the like, the use of the AI technology in the communications field is explored to seek new technical approaches, so as to solve the technical challenges that the traditional methods struggle to address.

How to improve positioning accuracy of an AI/ML model for positioning a terminal device in the communication field is a problem that has been paid attention to in the communication field.

### SUMMARY

The embodiments of the present disclosure provide a method and a device for acquiring label information, and a device and a storage medium.

A first aspect of the embodiments of the present disclosure provides a method for acquiring label information, including the following operations.

The first network device determines a correction parameter.

The first network device determines label information corresponding to each data in the data set based on the correction parameter. The data set and the label information corresponding to each data in the data set are used to train a first model.

A second aspect of the embodiments of the present disclosure provides a method for acquiring label information, including the following operations.

The second terminal device determines a data set and label information corresponding to each data in the data set. The label information is determined based on a correction parameter.

The second terminal device trains a first model based on the data set and the label information corresponding to each data in the data set.

A third aspect of the embodiments of the present disclosure provides a device for acquiring label information, which is applied to a first network device, and includes a first determination unit.

The first determination unit is configured to determine a correction parameter, and determine label information corresponding to each data in the data set based on the correction parameter. The data set and the label information corresponding to each data in the data set are used to train a first model.

A fourth aspect of the embodiments of the present disclosure further provides a device for acquiring label information, which is applied to a second terminal device, including a second determination unit and a second training unit.

The second determination unit is configured to determine a data set and label information corresponding to each data in the data set. The label information is determined based on a correction parameter.

The second training unit is configured to train a first model based on the data set and the label information corresponding to each data in the data set.

A fifth aspect of the embodiments of the present disclosure provides a network device. The network device includes a processor and a memory. The memory is configured to store a computer program, and the processor is configured to invoke and execute the computer program stored in the memory to perform the method according to the first aspect described above.

A sixth aspect of the embodiments of the present disclosure provides a terminal device. The terminal device includes a processor and a memory. The memory is configured to store a computer program, and the processor is configured to invoke and execute the computer program stored in the memory to perform the method according to the second aspect described above.

The chip according to the embodiments of the present disclosure is configured to implement the model monitoring method described above.

Specifically, the chip includes a processor for invoking and executing a computer program from a memory, to enable the device on which the chip is mounted to perform the method according to the first aspect or second aspect described above.

The computer-readable storage medium according to the embodiments of the present disclosure is configured to store a computer program that causes a computer to perform the method according to the first aspect or second aspect described above.

The computer program product according to the embodiments of the present disclosure includes a computer program instruction that causes a computer to perform the method according to the first aspect or second aspect described above.

The computer program according to the embodiment of the present disclosure causes a computer to perform the method according to the first aspect or the second aspect described above when the computer program is run on the computer.

In the method for acquiring label information according to the embodiment of the present disclosure, the first network device may determine label information corresponding to each data in the data set by using the correction parameter. In this way, the first network device can train the first model based on the modified label information, to improve the reliability of the data set for training the first model, thereby improving the positioning accuracy of the first model.

### BRIEF DESCRIPTION OF THE DRAWINGS

The accompanying drawings described herein are intended to provide a further understanding of the present disclosure, and constitute a part of the present disclosure, and the schematic embodiments of the present disclosure and the description thereof are intended to explain the present disclosure, and do not constitute an undue limitation to the present disclosure. In the accompanying drawings:
FIG. 1 is a schematic diagram of a communication flow of a wireless communication system according to an embodiment of the present disclosure;
FIG. 2A is a schematic principle diagram of a downlink positioning method according to an embodiment of the present disclosure;
FIG. 2B is a schematic principle diagram of an uplink positioning method according to an embodiment of the present disclosure;
FIG. 3 is a schematic structural diagram of a neuron according to the related art;
FIG. 4 is a schematic structural diagram of a neural network according to the related art;
FIG. 5 is a schematic structural diagram of a convolutional neural network provided by the related art;
FIG. 6 is a schematic structural diagram of a Long Short-Term Memory (LSTM) network provided by the related art;
FIG. 7 is a first schematic flowchart of a method for acquiring label information according to an embodiment of the present disclosure;
FIG. 8A is a schematic diagram of a first model direct positioning principle according to an embodiment of the present disclosure;
FIG. 8B is a schematic diagram of a first model assisted positioning principle according to an embodiment of the present disclosure;
FIG. 9 is a second schematic flowchart of a method for acquiring label information according to an embodiment of the present disclosure;
FIG. 10 is a third schematic flowchart of a method for acquiring label information according to an embodiment of the present disclosure;
FIG. 11 is a fourth schematic flowchart of a method for acquiring label information according to an embodiment of the present disclosure;
FIG. 12 is a fifth schematic flowchart of a method for acquiring label information according to an embodiment of the present disclosure;
FIG. 13 is a sixth schematic flowchart of a method for acquiring label information according to an embodiment of the present disclosure;
FIG. 14 is a seventh schematic flowchart of a method for acquiring label information according to an embodiment of the present disclosure;
FIG. 15 is a schematic structural composition diagram of a device 1500 for acquiring label information according to an embodiment of the present disclosure;
FIG. 16 is a schematic structural composition diagram of a device 1600 for acquiring label information according to an embodiment of the present disclosure;
FIG. 17 is a schematic structural composition diagram of a communication device according to an embodiment of the present disclosure; and
FIG. 18 is a schematic structural diagram of a chip according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are a part of the embodiments of the present disclosure, rather than all of the embodiments. Based on the embodiments in the present disclosure, all other embodiments obtained by those skilled in the art without creative work fall within the scope of protection of the present disclosure.

In order to facilitate understanding of the technical solutions of the embodiments of the present disclosure, the related technologies of the embodiments of the present disclosure are described below, and the related technologies below can be, as optional solutions, arbitrarily combined with the technical solutions of the embodiments of the present disclosure, and all of them belong to the scope of protection of the embodiments of the present disclosure.

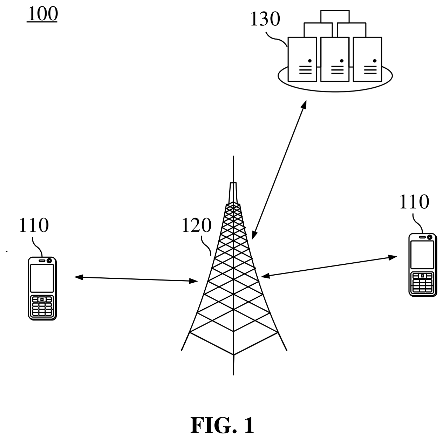

FIG. 1 is a schematic diagram of an application scenario according to an embodiment of the present disclosure.

As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the communication device 100 is illustrated as an example in the embodiments of the present disclosure, but the embodiments of the present disclosure are not limited thereto. That is, the technical solution of the embodiment of the present disclosure may be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) system, an enhanced Machine-Type Communications (eMTC) systems, a 5th generation (5G) communication systems (also referred to as New Radio (NR) communication systems), or a future communication system, etc.

In the communication system 100 illustrated in FIG. 1, the network device 120 may be an access network device that communicates with the terminal device 110. The access network device may provide communication coverage for a particular geographic area and may communicate with a terminal device 110 (e.g., a UE) within the coverage area.

The network device 120 may be an Evolutionary Node B (eNB or eNodeB) or a Next Generation Radio Access Network (NG RAN) device in the Long Term Evolution (LTE) system, or a base station (the next generation Node B, gNB) in the NR system, or a wireless controller in a Cloud Radio Access Network (CRAN), or the network device 120 may be a relay station, an access point, an in-vehicle device, a wearable device, a hub, a switch, a bridge, a router, or a network device in a future evolution Public Land Mobile Network (PLMN), etc.

The terminal device 110 may be any terminal device including, but not limited to, terminal devices connected to the network device 120 or other terminal devices in a wired or wireless manner.

For example, the terminal device 110 may be an access terminal, a User Equipment (UE), a user unit, a user station, a mobile station, a mobile unit, a remote station, a remote terminal, a mobile device, a user terminal, a terminal, a wireless communication device, a user agent or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having wireless communication functionality, a computing device or other processing device connected to a wireless modem, an in-vehicle device, a wearable device, a terminal device in a 5G network, or a terminal device in a future evolution network, or the like.

The terminal device 110 may be used for device-to-device (D2D) communication.

[**0055]** The wireless communication system 100 may further include a core network device 130 that communicates with the network device 120, and the core network device 130 may be a 5G Core (5GC) device, for example, an Access and Mobility Management Function (AMF), or an Authentication Server Function (AUSF), or a User Plane Function (UPF), or a Session Management Function (SMF). Optionally, the core network device 130 may also be an Evolved Packet Core (EPC) device in the LTE network, for example, a Session Management Function + Core Packet Gateway (SMF + PGW-C) device. It should be understood that the SMF + PGW-C can simultaneously implement functions of the SMF and PGW-C. In the process of network evolution, the core network devices may be called as other names, or may be formed as a new network entity by dividing the functions of the core network, which is not limited by the embodiments of the present disclosure.

[**0056]** The respective functional units in the communication system 100 may also establish a connection between each other through a next generation (NG) network interface to achieve communication.

[**0057]** For example, the terminal device establishes an air interface connection with the access network device through the NR interface for transmitting user plane data and control plane signaling. The terminal device can establish a control plane signaling connection with the AMF through the NG interface 1 (referred to as N1 for short). An access network device, such as a next generation radio access base station (gNB), can establish a user plane data connection with the UPF through an NG interface 3 (referred to as N3 for short). The access network equipment can establish a control plane signaling connection with the AMF through the NG interface 2 (referred to as N2 for short). The UPF can establish a control plane signaling connection with the SMF through the NG interface 4 (referred to as N4 for short). The UPF can interact user plane data with the data network through the NG interface 6 (referred to as N6 for short). The AMF may establish a control plane signaling connection with the SMF through the NG interface 11 (referred to as N11 for short). The SMF may establish a control plane signaling connection with the PCF through the NG interface 7 (referred to as referred to as N7 for short).

[**0058]** FIG. 1 exemplarily illustrates one network device, one core network device, and two terminal devices. Optionally, the wireless communication system 100 may include a plurality of network devices, and another number of terminal devices may be included within the coverage range of each network device, which is not limited by the embodiment of the present disclosure.

[**0059]** It should be noted that FIG. 1 only illustrates a system to which the present disclosure is applied as an example, and of course, the method shown in the embodiment of the present disclosure may also be applied to other systems. Further, the terms "system" and "network" are often used interchangeably herein. Herein, the term "and/or" is only an association relationship describing an association object, and means that there may be three relationships. For example, A and/or B may mean that A alone exists, A and B simultaneously exist, and B alone exists. In addition, the character "/" herein generally indicates that the associated objects before and after are in an "or" relationship. It should also be understood that the "indication" mentioned in the embodiments of the present disclosure may be a direct indication, an indirect indication, or an associated relationship. For example, A indicates B, which may mean that A directly indicates B, for example, B can be acquired by A; which may also mean that A indicates B indirectly, for example A indicates C, and B can be acquired through C; which can also be indicated that there is an association relationship between A and B. It should also be understood that "correspondence" mentioned in the embodiments of the present disclosure may indicate that there is a direct correspondence or indirect correspondence between the two objects, there is an association relationship between the two objects, or may indicate an association between indicating and being indicated, configuring and being configured, or the like. It should also be understood that the "predefined" or "predefined rules" mentioned in the embodiments of the present disclosure may be implemented by storing corresponding codes or tables in advance in devices, or other manner for indicating relevant information (e.g., including terminal devices and network devices), and specific implementations thereof is not limited in the present disclosure. For example, predefining may refer to defining in the protocol. It should also be understood that in embodiments of the present disclosure, the "protocol" may refer to standard protocols in the field of communication, for example, may include an LTE protocol, an NR protocol, and related protocols applied to future communication systems, which is not limited in the present disclosure.

[**0060]** In order to facilitate understanding of the technical solutions of the embodiments of the present disclosure, the related technologies of the embodiments of the present disclosure are described below, and the related technologies below can be, as optional solutions, arbitrarily combined with the technical solutions of the embodiments of the present disclosure, and all of them belong to the scope of protection of the embodiments of the present disclosure.

[**0061]** In practical applications, the method for positioning a terminal device may include a UE-based positioning method, a UE-assisted /Location Management Function (LMF) network element-based (LMF-based) positioning method and an access network node-based assisted (Next Generation Radio Access Network (NG-RAN) node assisted) positioning method.

[**0062]** In the UE-based positioning method, the terminal device directly calculates the position of the target UE.

[**0063]** In the UE-assisted /LMF-based positioning method, the terminal reports a measurement result to the LMF, and the LMF calculates a position of the target UE based on the collected measurement result.

[**0064]** In the NG-RAN node assisted positioning method, the base station reports a measurement result of the network Transmission/Reception Point (TRP) to the LMF, and the LMF calculates a position of the target UE based on the collected measurement result.

[**0065]** It should be noted that a plurality of TRPs around the terminal device may participate in position positioning, one base station may have one TRP, or one base station may have a plurality of TRPs. The LMF may be a positioning server responsible for the entire positioning process.

[**0066]** In the traditional positioning method, the UE or LMF applies traditional algorithms (such as Chan algorithm, Taylor expansion and other algorithms) to estimate the position of the terminal device for different methods.

[**0067]** The downlink positioning method and the uplink positioning method are described below respectively.

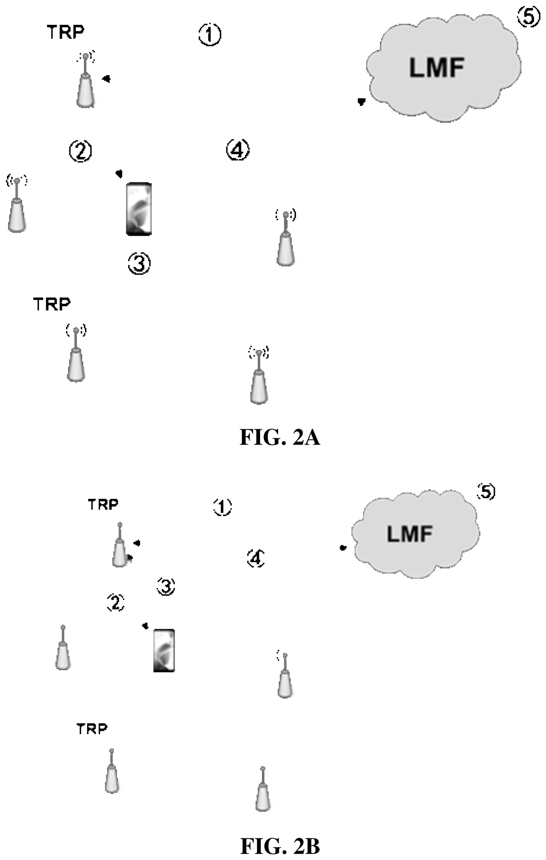

[**0068]** Referring to FIG. 2A, the downlink positioning method may include the following operations.

[**0069]** At operation 1, the LMF network element notifies the TRP of related configuration.

[**0070]** The related configuration may include configuration information of a Positioning Reference Signal (PRS) and/or information such as a type of a measurement result to be reported by the terminal device.

[**0071]** At operation 2, the TRP transmits the PRS.

[**0072]** At operation 3, the terminal device receives the positioning signal PRS and performs measurement.

[**0073]** It should be noted that the terminal device requires different measurement results in different positioning methods.

[**0074]** At operation 4, the terminal device feeds back the measurement result to the LMF.

[**0075]** The terminal device feeds back the measurement result to the LMF through the base station.

[**0076]** At operation 5, The LMF calculates position information.

[**0077]** It should be noted that a schematic flowchart of the UE-assisted positioning method is described above. For the UE-based positioning method, in the fourth step described above, the terminal device directly calculates position information based on the measurement result, without reporting the measurement result to the LMF, and then the calculation is performed through the network element. In the UE-based positioning method, the terminal device needs to know position information corresponding to the TRP, and the LMF needs to notify the terminal device of the position information corresponding to the TRP in advance.

[**0078]** Further, referring to FIG. 2B, the uplink positioning method may include the following steps.

[**0079]** At step 1, The LMF notifies the TRP of related configuration.

[**0080]** At step 2, the base station sends relevant signaling to the terminal device.

[**0081]** At step 3, the terminal device sends a Sounding Reference Signal (SRS).

[**0082]** At step 4, the TRP measures the SRS and sends a measurement result to the LMF.

[**0083]** At step 5, the LMF calculate position information.

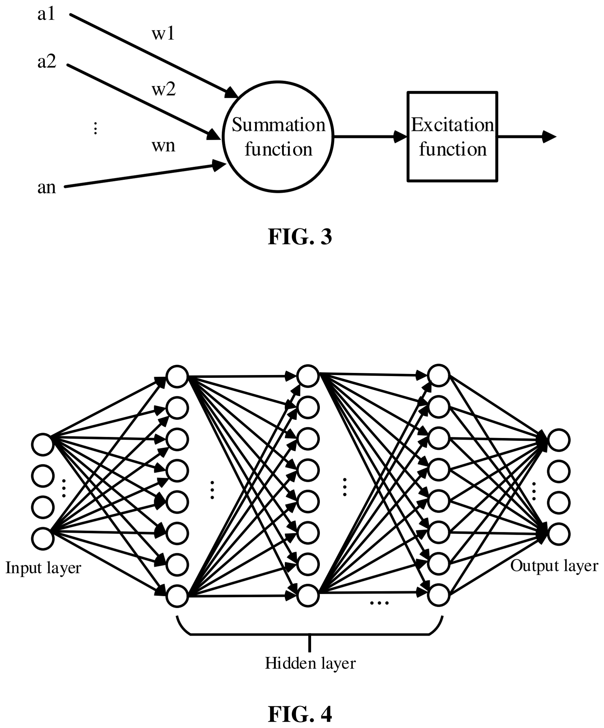

[**0084]** In recent years, artificial intelligence research represented by neural network has made great achievements in many fields, and will also play an important role in people's production and life for a long time in future. The neural network is an operation model composed of multiple neuron nodes connected to each other. Referring to a schematic diagram of a neuron shown in Figure 3, as shown in FIG. 3, the neuron structures may be connected to other neuron structures a1 to an. The transmission of signals between neuron structures will be affected by weights (for example, a weight value of the signal inputted by neuron structure a1 is w1), and each neuron structure can perform weighted summation on multiple input signals and output through a specific activation function.

[**0085]** FIG. 4 is a schematic structural diagram of a neural network according to the related art. As shown in FIG. 4, the structure of the neural network may include: an input layer, a hidden layer and an output layer. As shown in FIG. 4, the input layer is used for receiving data, and the hidden layer is used for processing data, and the output layer is used for generating a result. Each node represents a processing unit, which can be considered to simulate a neuron. Multiple neurons form a layer of neural network, and multi-layer information transmission and processing construct an overall neural network.

[**0086]** With the continuous development of research of the neural network, the deep learning algorithms in the neural network have been proposed in recent years, and more hidden layers have been introduced. Feature learning is carried out through layer-by-layer training of the neural network having multiple hidden layers, which greatly improves the learning and processing capabilities of the neural network, and the neural network is widely used in pattern recognition, signal processing, optimization combination, anomaly detection, etc.

[**0087]** Similarly, with the development of deep learning, the Convolutional Neural Networks (CNN) have also been further studied.

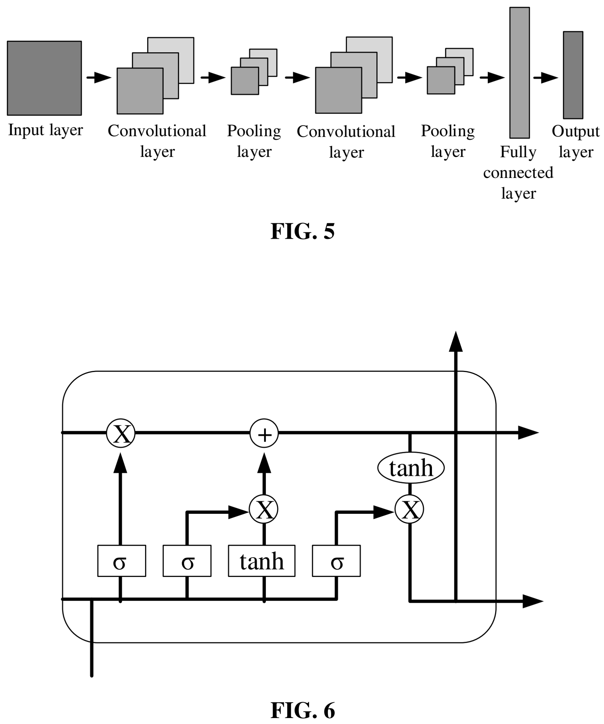

[**0088]** FIG. 5 is a schematic structure diagram of a convolutional neural network provided in the related art. As shown in FIG. 5, the structure of the convolutional neural network may include an input layer, a plurality of convolutional layers, a plurality of pooling layers, a fully connected layer and an output layer. The convolution layers and pooling layers can effectively control a sharp increase of network parameters, limit the number of parameters, mine the characteristics of local structure, and improve the robustness of the algorithm.

[**0089]** The recurrent neural network has made remarkable achievements in the field of natural language processing, such as machine translation, speech recognition and other application. The recurrent neural network is a neural network that models sequential data, memorizes information of the past moment and uses the information in the calculation of the current output, that is, the nodes between hidden layers are no longer unconnected but connected, and the input of the hidden layer includes not only the input layer but also the output of the hidden layer at the previous moment.

[**0090]** Figure 6 is a schematic structural diagram of a Long Short-Term Memory (LSTM) network provided in related technologies. The LSTM network is a common recurrent neural network. Unlike the recurrent neural network which only consider the most recent state, the LSTM network can decide which states should be left and which states should be forgotten, which solves the shortcomings of traditional recurrent neural networks in long-term memory.

[**0091]** In view of the great success achieved by the above-mentioned Artificial Intelligence (AI) technologies or Machine Learning (ML) technologies (such as neural networks and deep learning) in computer vision, natural language processing, etc., the use of the AI technology in the communications field is explored to seek new technical approaches, so as to solve the technical challenges that the traditional methods struggle to address.

[**0092]** In practical applications, the AI/ML technology can be used to position the terminal device, that is, the position of terminal device can be determined based on the AI/ML model. It should be understood that the positioning accuracy of the trained AI/ML model raises with the accuracy of the label information corresponding to each data sample in the data set used for training the AI/ML model raises. Exemplarily, if the label information is the position of the terminal device, with the accuracy of the position of the terminal device raises, the positioning accuracy of the trained AI/ML model raises.

[**0093]** In general, the position of the terminal device may be determined by the traditional positioning method shown in FIG. 2A or FIG. 2B to acquire the label information of each sample data in the data set. In addition, the position of the terminal device may also be determined using a non-NR method, for example, a Global Positioning System (GPS), to acquire the label information of each sample data in the data set.

[**0094]** However, in scenarios where a Non-Line of Sight (NLOS) diameter is large, the above-mentioned traditional positioning method has a positioning error greater than 10 meters and the positioning error for the non-NR method is larger than that of the positioning errors in the traditional positioning method. In addition, the position of the terminal device is generally private information, and the label information related to the position may only be acquired by the above method. As such, the accuracy of the label information related to the position is poor, and the positioning accuracy of the AI/ML model trained is also poor. How to train an AI/ML model with high positioning accuracy, that is to say, how to acquire a data set with high reliability is an urgent technical problem to be solved.

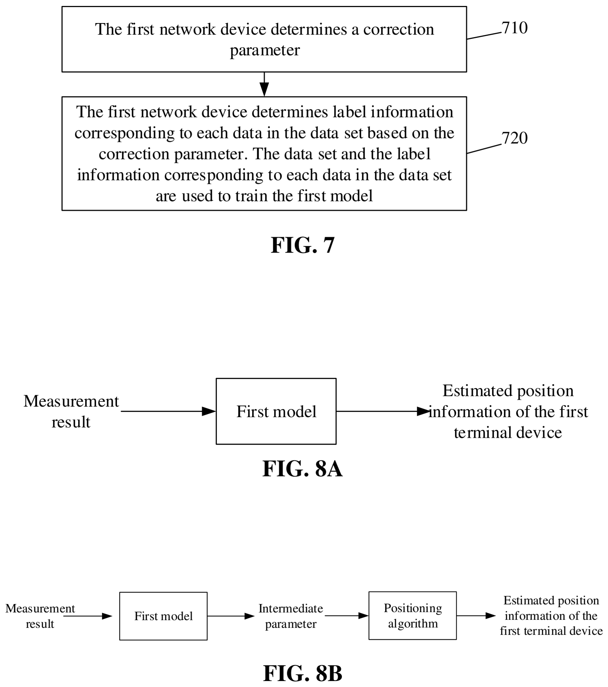

[**0095]** Based on this, the embodiment of the present disclosure provides a method for acquiring label information, and FIG. 7 is a schematic flowchart of the method for acquiring label information according to the embodiment of the present disclosure. As shown in FIG. 7, the method includes the following operations.

[**0096]** At operation 710, the first network device determines a correction parameter.

[**0097]** At operation 720, the first network device determines label information corresponding to each data in the data set based on the correction parameter. The data set and the label information corresponding to each data in the data set are used to train the first model.

[**0098]** It should be understood that the first model may be deployed in the first network device. The first model may be an AI/ML model for positioning a terminal device, such as a neural network model, a CNN model, an LSTM model, or the like, which is not limited in the embodiment of the present disclosure.

[**0099]** Optionally, the first network device may be a core network device. Exemplarily, the first network device may be an LMF, a positioning server, or other network elements having a positioning management function, which is not limited in the embodiment of the present disclosure.

[**00100]** It should be noted that the first model may be directly used to determine position information of the terminal device or may be used to assist in determining position information of the terminal device, and the type of the first model is not limited in the embodiment of the present disclosure. Exemplarily, referring to FIG. 8A which is a schematic diagram of a first model direct positioning principle, the input of the first model is measurement information of the terminal device, and the output of the first model is estimated position information of the terminal device. FIG. 8B shows a schematic diagram of a first model assisted positioning principle, the input of the first model is measurement information, and the output of the first model may include intermediate parameters. In this way, the first network device may process the intermediate parameters in combination with the positioning algorithm to acquire estimated position information of the terminal device.

[**00101]** It should be understood that the first network device may acquire a data set of the first model before training the first model. The data set of the first model may be used for training the first model, and may also be used for monitoring performance of the first model. The monitoring the performance of the first model may include comparing an output result of the first model with label information of the data set, and monitoring whether an error between the output of the first model and the label information meets a performance requirement.

[**00102]** Optionally, the data set of the first model may include a large number of measurement information of terminal devices of different types.

[**00103]** Exemplarily, the measurement information may include one or more of: a Channel Impulse Response (CIR), a Power Delay Profile (PDP), a Time of Arrival (ToA), an Uplink Time Difference of Arrival (UL TDoA), a Downlink time Difference of Arrival (DL TdoA), an Uplink Angle-of-Departure (UL AoD), a Downlink Angle-of-Departure (DL AoD), an UL Relative Time of Arrival (UL RTOA), a DL Reference Signal Time Difference (DL RSTD), a Reference Signal Receiving Power (RSRP), an azimuth angle and a zenith angle.

[**00104]** It should be noted that the measurement information may be the CIR, the PDP, the ToA, the UL TDoA, the DL TdoA, the UL AoD, the DL AoD, the UL RTOA, the DL RSTD, the RSRP, the azimuth angle, the zenith angle, and the like of a communication channel between the terminal device and one or more second network devices. The second network device may be an access network device, such as a base station, a micro base station, a TRP, or the like, which is not limited in the embodiment of the present disclosure.

[**00105]** In an embodiment of the present disclosure, before the first network device trains the first model by using the data set, the first network device may further determine the correction parameter, and determine the label information corresponding to each data in the data set by using the correction parameter.

[**00106]** Optionally, the label information may be position information of the terminal device, such as two-dimensional spatial position coordinates (x, y) of the terminal device. Further, the label information may be an intermediate parameter related to the position information of the terminal device. Exemplarily, the intermediate parameter may comprise one or more of: the ToA, the UL TDoA, the DL TDoA, the UL AoD, the DL AoD, the UL RTOA, the DL RSTD, the RSRP and the Line of Sight (LOS)/Non-Line of Sight (NLOS) identification result.

[**00107]** It should be noted that, in the first model illustrated in FIG. 8A, the label information of each data in the data set may be the position information of the terminal device. For the first model shown in FIG. 8B, the label information of each data in the data set may be the intermediate parameter related to the position of the terminal device. That is, in the embodiment of the present disclosure, the type of the label information may be the same as the type of the output data of the first model.

[**00108]** In the embodiment of the present disclosure, each data in the data set has associated initial label information. The initial label information associated with each data in the data set may be determined by a traditional positioning method, such as the method shown in FIG. 2A or FIG. 2B, or a GPS method, or an AI/ML model, which is not limited in the embodiment of the present disclosure.

[**00109]** It can be understood that the first network device may correct the initial label information associated with each data in the data set by using the correction parameter to acquire the label information corresponding to each data in the data set. In this way, the first network device can train the first model based on the corrected label information, to improve the reliability of the data set used for training the first model, and thus improve the positioning accuracy of the first model.

[**00110]** Hereinafter, a manner in which the first network device determines the correction parameter is described below in detail.

[**00111]** In the embodiment of the present disclosure, the first network device may determine the correction parameter by one or more of the following manners. The correction parameter is determined by the preset rule, the correction parameter is predefined by the protocol, the correction parameter is configured by another network devices, and the correction parameter is reported by the first terminal device.

[**00112]** In some embodiments, the first network device determines the correction parameter through the preset rule, which may be implemented in the following operation.

[**00113]** The first network device determines the correction parameter based on an error value between actual information and estimated information of the first terminal device.

[**00114]** It should be noted that the actual information of the first terminal device may be known. Exemplarily, an actual position of the first terminal device may be known, or actual intermediate parameter of the first terminal device may be known.

[**00115]** Optionally, the first terminal device may be a Positioning Reference Unit (PRU).

[**00116]** The PRU may perform downlink positioning measurements (for example, a downlink signal time difference, a reference signal reception power, a UE-side receiving signal and transmission signal Rx-Tx time difference, etc.), and report the measurement results to the positioning server. For example, the PRU receives a PRS and performs downlink positioning measurement according to the PRS. Further, the PRU can transmit an SRS, and the base station performs measurement based on the SRS and reports the uplink positioning measurement result (for example, an uplink relative arrival time, an uplink arrival angle, a base station-side Rx-Tx time difference, and the like).

[**00117]** In the embodiment of the present disclosure, since the actual information of the first terminal device is known, the first network device may use an error value between the actual information of the first terminal device and the estimated information of the first terminal device to correct the label information of the normal terminal device.

[**00118]** It should be noted that the normal terminal device may be a terminal device whose label information is to be corrected. In the embodiment of the present disclosure, the normal terminal device may refer to the second terminal device in the embodiment of the present disclosure. The second terminal device and the normal terminal device may refer to the same type of terminal device.

[**00119]** The estimated information of the first terminal device may be determined according to a traditional positioning method, such as the method shown in FIG. 2A or FIG. 2B, or the GPS method, or the AI/ML model, which is not limited in the embodiment of the present disclosure.

[**00120]** Optionally, the actual information of the first terminal device may be actual position information, and correspondingly, the estimated information of the first terminal device may be an estimated position information.

[**00121]** In this scenario, the correction parameter may be a distance error between the actual position information and the estimated position information. Optionally, the correction parameter may include a first position correction parameter in a first direction and/or a second position correction parameter in a second direction. Exemplarily, the first direction may be the horizontal direction, x direction. The second direction may be a vertical direction, y direction.

[**00122]** Exemplarily, a horizontal distance error and a vertical distance error between the actual position information and the estimated position information of the first terminal device PRU1 are h1 and v1, respectively. If position coordinates of the terminal device to be corrected is (x, y), the corrected position coordinates may be (x ± h1, y ± v1). The first network device may use the corrected position coordinates (x ± h1, y ± v1) as label information of a measurement parameter associated with the terminal device.

[**00123]** That is, the first network device may correct the position information in only the first direction or the second direction, or may correct the position information in both the first direction and the second direction, to flexibly correct the label information of the terminal device, and improve the accuracy of the label information corresponding to the terminal device.

[**00124]** Optionally, the actual information of the first terminal device may be an actual intermediate parameter, and may be for example, one or more of an actual ToA, UL TDoA, DL TDoA, UL AoD, DL AoD, UL RTOA, DL RSTD, RSRP and LOS/NLOS identification result. The estimated information of the first terminal device may be an estimated intermediate parameter, and may be for example, one or more of ToA, UL TDoA, DL TDoA, UL AoD, DL AoD, UL RTOA, DL RSTD, RSRP and LOS/NLOS identification result estimated in a traditional manner.

[**00125]** In summary, in the method for acquiring label information according to the embodiment of the present disclosure, the first network device can correct the label information of the normal terminal device by means of the actual information of the special terminal device, thereby improving the reliability of the data set used for training the first model and further improving the positioning accuracy.

[**00126]** It should be noted that the number of first terminal devices is one, that is, the first network device may determine the correction parameter according to an error value between the actual information and the estimated information of the one first terminal device. It should be understood that the first network device may manage a plurality of first terminal devices, that is, the first network device may manage a plurality of terminal devices, actual information of which is known. The one first terminal device may be any one of a plurality of first terminal devices managed by the first network device.

[**00127]** In other embodiments, the number of first terminal devices may be more than one. That is, the first network device may further determine the correction parameter according to the actual information and the estimated information of the plurality of the first terminal devices. That is, the first network device determines the correction parameter through the preset rule, which can be implemented through the following operation.

[**00128]** The first network device may determine the correction parameter based on an average value of error values between the actual information and the estimated information of the plurality of first terminal devices.

[**00129]** In the embodiment of the present disclosure, when the number of first terminal devices is N, the first network device may determine the error value between the actual information and the estimated information of each first terminal device, to acquire N error values. Further, the first network device may calculate an average value of the N error values to acquire the correction parameter.

[**00130]** Optionally, when the label information is the position information, the correction parameter may include an average value of error values in a first direction (for example, the horizontal direction), and/or an average value of error values in a second direction (for example, a vertical direction) between the actual position information and the estimated position information of the N first terminal devices.

[**00131]** Exemplarily, the plurality of first terminal devices may include PRU1 and PRU2. The horizontal distance error and the vertical distance error between the actual position information and the estimated position information of the PRU1 are h1 and v1, respectively, and the horizontal distance error and the vertical distance error between the actual position information and the estimated position information of the PRU2 is h2 and v2, respectively. The average value of the horizontal distance errors is (h1+h2)/2 and the average value of the vertical distance errors is (v1+v2)/2. If the position coordinates of the terminal device to be corrected is (x, y), the corrected label information may be (x ± (h1+h2)/2, y ± (v1+v2)/2)).

[**00132]** In summary, since the error of the correction parameter determined based on the actual information and the estimated information of one first terminal device is large, the error may be not suitable to correct the position of the terminal device in some scenarios, the correction parameter is determined based on the actual information and the estimated information of a plurality of first terminal devices in the present disclosure, thereby improving the accuracy of the correction parameter.

[**00133]** In another embodiments, the first network device determines the correction parameter through the preset rule, which may be implemented through the following operation.

[**00134]** The first network device determines the correction parameter based on the error value between the actual information and the estimated information of the first terminal device, and a first proportional parameter. The first proportional parameter is used to characterize a position relationship between the first terminal device and a second terminal device. The second terminal device is associated with at least part of the data in the data set.

[**00135]** The second terminal device may be a terminal device, label information of which is to be corrected. For example, the second terminal device may be another terminal device other than the first terminal device. As described in the above-described embodiment, the second terminal device may also be referred to as a normal terminal device, and the second terminal device and the normal terminal device may refer to the same type of terminal device.

[**00136]** It should be noted that the data set for training the first model may include a large amount of measurement information of the second terminal device. The measurement information of the second terminal device and the corresponding label information belong to the data set used for training the first model.

[**00137]** It should also be noted that at least part of the above data may include one or more pieces of data. Each of at least part of the above data may represent measurement information of the second terminal device. The measurement information may include one or more of the CIR, the PDP, the ToA, the UL TDoA, the DL TdoA, the UL AoD, the DL AoD, the UL RTOA, the DL RSTD, the RSRP, the azimuth angle and the zenith angle as described in the above embodiments.

[**00138]** In the embodiment of the present disclosure, the first network device may determine a correction parameter for the second terminal device based on the error value between the actual information and the estimated information of the first terminal device, and the first proportional parameter. The first proportional parameter may characterize a positional relationship between the first terminal device and the second terminal device. The positions of the first terminal device and the second terminal device get close as the first proportional parameter increases, and conversely, the positions between the first terminal device and the second terminal device gets far as the first proportional parameter decreases.

[**00139]** Optionally, the first proportional parameter may be determined based on characteristic information of the first terminal device and characteristic information of the second terminal device. The characteristic information may characterize a channel characteristic between the terminal device and the second network device.

[**00140]** It should be noted that with the first proportional parameter increases, the characteristic information of the first terminal device is approximate to the characteristic information of the second terminal device, that is, the position of the first terminal device gets close to the position of the second terminal device. Conversely, with the first proportional parameter decreases, the characteristic information of the first terminal device is not approximate to the characteristic information of the second terminal device, that is, the position of the first terminal device gets far from the position of the second terminal device.

[**00141]** Exemplarily, the characteristic information may include one or more of channel information, measurement information, the power of a first path, a channel impulse response and spatial consistency information.

[**00142]** It can be understood that with the characteristic information of the first terminal device is approximate to the characteristic information of the second terminal device, the position of the first terminal device gets close to the position of the second terminal device. In practical application, since the position information of the second terminal device determined by the traditional method is not accurate, the first network device may determine a position relationship between the first terminal device and the second terminal device by using the characteristic information of the terminal device in the embodiment of the present disclosure.

[**00143]** Exemplarily, the first network device may calculate an Euclidean distance or a cosine similarity between the characteristic information of the first terminal device and the characteristic information of the second terminal device to acquire the first proportional parameter.

[**00144]** In the embodiment of the present disclosure, when the position of the first terminal device is close to the position of the second terminal device, the error value determined by the actual information and the estimated information of the first terminal device is close to the error value of the actual information and the estimated information of the second terminal device. Based on this, the first network device may determine the correction parameter for the second terminal device according to the error value between the actual information and the estimated information of the first terminal device and the first proportional parameter.

[**00145]** Optionally, the correction parameter may be a function between the error value and the first proportional parameter. For example, the correction parameter = F (the error value, the first proportional parameter). Exemplarily, the correction parameter may be the error value * the first proportional parameter, or may be the error value/the first proportional parameter, which is not limited in the embodiment of the present disclosure. Exemplarily, the F function may be a normal distribution function, that is, the error value is a normal distribution function with the first proportional parameters are different values.

[**00146]** It should be noted that different second terminal devices may correspond to different correction parameters. That is, the first network device may correct the label information of the second terminal device using the correction parameter associated with the second terminal device.

[**00147]** Optionally, the first proportional parameter may be greater than or equal to a first threshold. That is, the first network device may select a first terminal device located close to the second terminal device, and determine a correction parameter for the second terminal device based on an error value between the actual information and the estimated information of the selected first terminal device, and the first proportional parameter.

[**00148]** Optionally, the first threshold may be a parameter predefined by the protocol, for example, 95%. The first threshold may also be a parameter determined according to the preset rule, which is not limited in the embodiments of the present disclosure.

[**00149]** Exemplarily, the data set used to train the first model may include the measurement information of UE1. The first network device may traverse PRUs in the vicinity of the UE 1 based on the characteristic information of the UE 1, and select the PRU1 closest to the characteristic information of the UE 1. Specifically, the first network device may determine the PRU1 which is the most approximate to the characteristic information of the UE 1 based on the characteristic information of the UE 1 and the characteristic information of the PRUs in the vicinity of the UE 1. After the first network device determines the PRU 1, the first network device may determine the correction parameter of the UE 1 based on the error value between the actual position information and the estimated position information of the PRU 1, and the proportional parameter determined by the characteristic information of the UE 1 and the characteristic information of the PRU 1. In this way, the first network device may correct the label information corresponding to the measurement information related to the UE 1 based on the correction parameter of the UE 1.

[**00150]** In summary, the first network device may the select the actual information and the estimated information of the first terminal device which are the closest approximation of the characteristic parameter of the terminal device to be corrected, to determine the correction parameter and acquire the label information, thereby improving the accuracy of the label information, and improving the positioning accuracy of the first model.

[**00151]** In some embodiments, in addition to the first network device determines the correction parameter based on the above rules, the correction parameter may be a value predefined by the protocol. For example, the correction parameter may be 1 meter, 0.5 meter, which is not limited in the embodiment of the present disclosure.

[**00152]** In other embodiments, the correction parameter may also be configured by a device other than the first network device. For example, the correction parameter may be a value configured by the positioning server through dedicated signaling, such as 1 meter, 0.5 meter, which is not limited in the embodiment of the present disclosure.

[**00153]** In still other embodiments, the correction parameter may be a parameter reported by the first terminal device. It can be understood that a terminal device (such as a PRU) of which actual information is known in the network may determine the correction parameter according to the preset rule, and transmit the determined correction parameter to the first network device through dedicated signaling or other signaling.

[**00154]** It should be noted that the manner in which the first terminal device determines the correction parameter according to the preset rule is similar to the manner in which the first network device determines the correction parameter according to the preset rule in the above-described embodiment, and the description is not repeated here for the sake of brevity.

[**00155]** In some embodiments, the correction parameter may also be determined according to both the preset rule and the value predefined by the protocol. The value predefined by the protocol can modify an adjustment step size of the parameter.

[**00156]** Optionally, the first network device may perform multiple rounds of training on the first model, and different correction parameters may be used in different rounds of training, to acquire the label information corresponding to each data in the data set. When the first round of training is performed on the first model, the first network device may determine a first correction parameter according to the preset rule in the above-described embodiment. In this way, the first network device may determine the label information of each data in the data set according to the first correction parameter to train the first model.

[**00157]** When the second round of training is performed on the first model, the first network device may adjust the first correction parameter according to a value (i.e., an adjustment step size of the correction parameter) predefined by the protocol, to acquire a second correction parameter. In this way, the first network device may determine the label information of each data in the data set according to the second correction parameter to train the first model.

[**00158]** The first network device may continue adjusting the correction parameter based on the value (i.e., the adjustment step size of the correction parameter) predefined by the protocol and perform multiple rounds of training on the first model until the first model meets the actual demand.

[**00159]** It should be notes that the first correction parameter and the second correction parameter may be correction parameters for different training processes. The training process may use a third correction parameter, a fourth correction parameter and the like, which are not described exhaustively in the embodiments of the present disclosure. The first correction parameter may be different from the second correction parameter, and the first correction parameter and the second correction parameter may be determined in different ways.

[**00160]** Exemplarily, an error between an actual position of the first PRU and an estimated position of the first PRU is 10 meters, the first correction parameter may be determined to be 2 meters in the first round of training according to the characteristic information of the first PRU and UE 1, and the first network device can use the first correction parameter to correct the label information of the terminal device to be corrected to train the first model. In the second round of training, the first network device may continue calculating the error between the actual position of the first PRU and the estimated position of the first PRU, and if the positioning accuracy of the first model needs to be improved, the first network device may adjust the correction parameter to acquire the second correction parameter, and the second correction parameter may be 3 meters. In this way, the first network device can continue correcting the label information of the terminal device to be corrected by using the correction parameter, and train the first model. The training is performed circularly until the positioning accuracy reaches the first accuracy. In this way, the correction parameter can be adaptively adjusted so that the accuracy of the first model meets the requirements of the positioning accuracy.

[**00161]** In summary, the first network device may determine the correction parameter in different ways, flexibly adjust the label information of each data in the data set, thereby improving the reliability of the data set used for training the first model, and improving the positioning accuracy of the first model.

[**00162]** A process of constructing the data set is described below in detail.

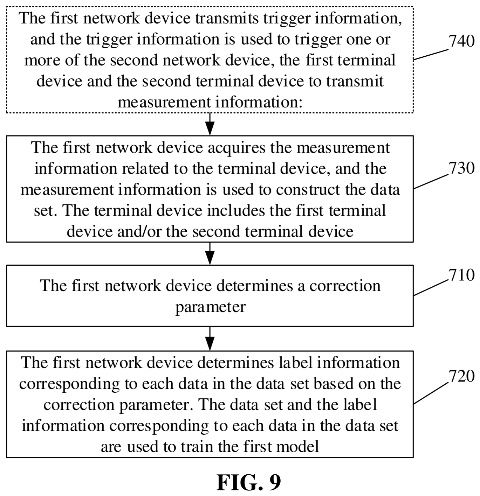

[**00163]** In an embodiment of the present disclosure, as shown in FIG. 9, the method for acquiring label information according to the embodiment of the present disclosure may further include the operation 730.

[**00164]** At operation 730, the first network device acquires measurement information related to a terminal device, and the measurement information is used to construct a data set. The terminal device includes a first terminal device and/or a second terminal device.

[**00165]** It should be noted that the first network device may further acquire the measurement information related to a plurality of terminal devices in the network before training the first model. In this way, the first network device may construct the data set based on the measurement information of the plurality of terminal devices. The data set may include the measurement information of the terminal device (the second terminal device) to be corrected, and/or the measurement information of the terminal device (i.e. the first terminal device) of which actual information is known.

[**00166]** Optionally, the measurement information related to each terminal device may include one or more of the CIR, the PDP, the ToA, the UL TDoA, the DL TdoA, the UL AoD, the DL AoD, the UL RTOA, the DL RSTD, the RSRP, the azimuth angle and the zenith angle.

[**00167]** It should be noted that the measurement information related to each terminal device may be the measurement information between the terminal device and the second network device. The measurement information related to the terminal device may involve a single second network device or a plurality of second network devices. That is, the number of pieces of measurement information may include one or more. When the number of pieces of measurement information is more than one, the plurality of measurement information may be measurement results between the terminal device and the plurality of second network devices.

[**00168]** Exemplarily, the plurality of measurement information may correspond to n TRPs, and the plurality of measurement information may be CIRs of the terminal device with respect to the n TRPs, RSRPs of the terminal device with respect to the n TRPs, DL RSTDs of the terminal device with respect to the n TRPs, ToAs of the terminal device with respect to the n TRPs, and AoDs of the terminal device with respect to the n TRPs. The number of the DL TDOA, the RSRP, the DL RSTD, the TOA and the AoD corresponding to each TRP may be greater than 1.

[**00169]** Optionally, in an embodiment of the present disclosure, referring to FIG. 9, before the operation 730 that the first network device acquires the measurement information related to the terminal device, the first network device may further perform operation 740.

[**00170]** In operation 740, the first network device transmits trigger information, and the trigger information is used to trigger one or more of the second network device, the first terminal device and the second terminal device to transmit measurement information.

[**00171]** It should be understood that the first network device may trigger the terminal device and/or the second network device in the network to report the measurement information related to the terminal device. In this way, the first network device may construct the data set of the first model based on the measurement information reported by various types of devices.

[**00172]** It should be noted that the data set of the first model may be used for training the first model and may be used for monitoring the performance of the first model.

[**00173]** The first network device triggers the terminal device to report the measurement information in the following manners. The first network device separately triggers the first terminal device of the terminal device to report the measurement information, or the first network device separately triggers the second terminal device of the terminal device to report the measurement information, or the first network device triggers both the first terminal device and the second terminal device to report the measurement information, which is not limited in the embodiments of the present disclosure. It can be understood that the first network device may respectively trigger the first terminal device and the second terminal device to report the measurement information.

[**00174]** Optionally, a reference signal type and/or a measurement type may be included in the trigger information.

[**00175]** Optionally, the reference signal type may include one or more of a positioning reference signal (PRS), a Synchronization Signal and PBCH Block (SSB) and a sounding reference signal (SRS).

[**00176]** Optionally, the measurement type may include any one of periodic measurement, aperiodic measurement, semi-persistent measurement and time window measurement.

[**00177]** For the periodic measurement, the first network device may configure a time period in which the terminal device and/or the second network device measures the reference signal, and the number of measurements in each time period, and the like, which are not limited in the embodiment of the present disclosure.

[**00178]** The reference signal is measured for a preset number of times in the aperiodic measurement. For the aperiodic measurements, the first network device may configure the number of measuring the reference signal by the terminal device and/or the second network device.

[**00179]** For the semi-persistent measurement, the first network device may configure a period of time for continuous measurement, a period of measurement within the period of time for continuous measurement, and the number of measurements within the period or the like.

[**00180]** For the time window measurement, the first network device may configure a starting position of a time window, a length of the time window and the number of measurements within the time window or the like.

[**00181]** In some embodiments, the first network device may trigger the terminal device to report downlink measurement information related to the terminal device, and the downlink measurement information may include one or more of the CIR, the PDP, the ToA, the DL TDoA, the DL AoD, the DL RSTD, the RSRP, the azimuth angle and the zenith angle between the terminal device and one or more second network devices.

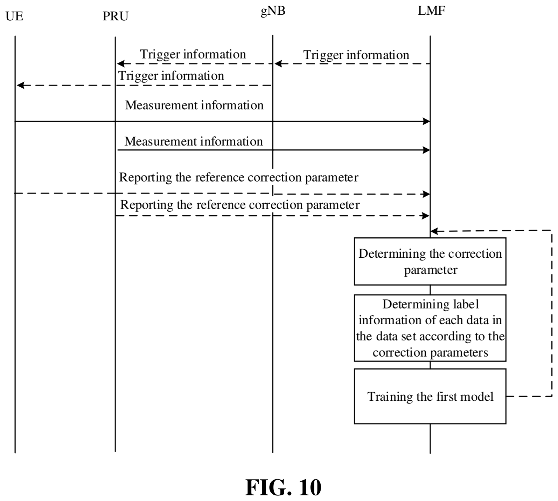

[**00182]** Exemplarily, in a scenario in which the first model is deployed in the first network device, if the positioning method adopts a downlink positioning technology, an example of the flowchart is shown in FIG. 10. It should be noted that the dotted line in FIG. 10 indicates an optional step. Referring to FIG. 10, the first network device is the LMF, the second network device is the gNB, the first terminal device is the PRU, and the second terminal device is the UE. The LMF may transmit trigger information to the PRU and the UE. The trigger information may trigger the UE and the PRU to measure a downlink reference signal (for example, the PRS and/or the SSB) transmitted by the gNB. The UE and the PRU report to the LMF one or more of a CIR, a PDP, a ToA, a DL TDoA, a DL AoD, a DL RSTD, an RSRP, an azimuth angle and a zenith angle measured for the downlink reference signal.

[**00183]** In other embodiments, the first network device may trigger the second network device to report uplink measurement information related to the terminal device, and the uplink measurement information may include one or more of a CIR, a PDP, a ToA, a UL TDoA, a UL AoD, a UL RTOA, an RSRP, an azimuth angle and a zenith angle between one or more second network devices and the terminal device.

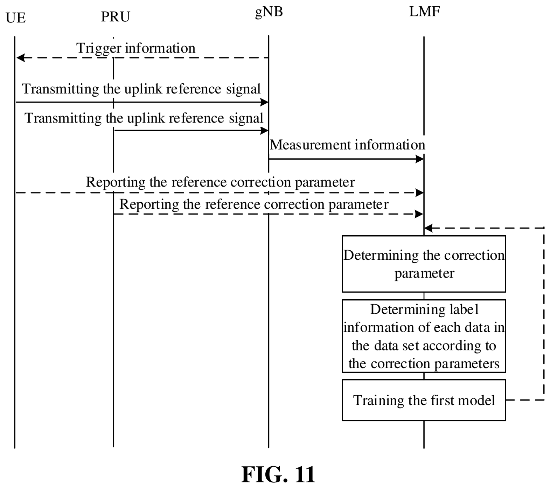

[**00184]** Exemplarily, in a scenario in which the first model is deployed in the first network device, if the positioning method adopts an uplink positioning technology, an example of the flowchart is shown in FIG. 11. It should be noted that the dotted line in FIG. 11 indicates an optional step. Referring to FIG. 11, the first network device is the LMF, the second network device is the gNB, the first terminal device is the PRU, and the second terminal device is the UE. The LMF may transmit trigger information to the PRU and the UE to trigger the PRU and the UE to transmit an uplink reference signal (e.g., SRS) to the gNB. The gNB may measure the uplink reference signal transmitted by the UE/PRU. The gNB may report one or more of a CIR, a PDP, a ToA, a UL TDoA, a UL AoD, a UL RTOA, an RSRP, an azimuth angle and a zenith angle to the LMF.

[**00185]** It should be noted that, as shown in FIG. 10 and FIG. 11, in some embodiments, the first terminal device and the second terminal device may further report a reference correction parameter to the first network device, and the reference correction parameter may be determined by the first terminal device and the second terminal device, to be used by the LMF for determining the correction parameter.

[**00186]** Hereinafter, the process of training the first model by the first network device is described in detail.

[**00187]** In an embodiment of the present disclosure, the method for acquiring label information according to the embodiment of the present disclosure may further include operation 750.

[**00188]** At operation 750, the first network device trains a first model based on the data set and the label information corresponding to each data in the data set.

[**00189]** In the embodiment of the present disclosure, when training the first model, the AI/ML technology may be used to build the first model. In the training process, the first network device may input each data in the data set acquired in the above-described embodiment into the first model, process the data through the first model, and acquire a first output result corresponding to each data. The first output result may be position information or an intermediate parameter related to the position information.

[**00190]** In this way, the first network device can compare the first output result corresponding to the data with the label information corresponding to the data to acquire a comparison result. Further, the parameter in the first model is updated based on the comparison result. The first network device may continue inputting the measurement information into the updated first model to acquire a second output result, and the first network device may compare the second output result with the label information corresponding to the data, and update the parameter in the first model according to the comparison result. In this way, the first model is iteratively trained based on each data in the data set and the label information corresponding to the respective data, to obtain the first model.

[**00191]** Optionally, when the accuracy of the first model is less than a first accuracy, the correction parameter is re-determined, and the label information corresponding to each data in the data set is updated based on the re-determined correction parameter, and the updated label is used to continue training the first model until the accuracy of the first model is greater than or equal to the first accuracy.

[**00192]** It should be noted that the accuracy of the first model may refer to processing accuracy or positioning accuracy of the first model. The accuracy of the first model being less than the first accuracy may be understood that the processing accuracy/the positioning accuracy of the first model is low, that is, the positioning accuracy is low. Accordingly, the accuracy of the first model being greater than or equal to the first accuracy may be understood that the processing accuracy/the positioning accuracy of the first model is high, that is, the positioning accuracy is high.

[**00193]** In the embodiment of the present disclosure, if the accuracy of the first model does not meet the actual positioning requirements, that is, an error between position information determined based on the first model and the actual position information is large, the first network device may re-determine the correction parameter in operation 710, and update the label information corresponding to each data in the data set based on the re-determined correction parameter. Furthermore, the first network device may continue training the first model based on the label information corresponding to the updated data until the accuracy of the first model meets the actual positioning requirement.

[**00194]** It can be understood that with reference to FIG. 10 and FIG. 11, the first network device may perform multiple rounds of training on the first model, and different correction parameters may be used in the multiple rounds of training to acquire the label information corresponding to each data in the data set. When the first round of training is performed on the first model, the first network device may determine a first correction parameter according to the preset rule in the above-described embodiment. In this way, the first network device may determine the label information of each data in the data set according to the second correction parameter to train the first model.

[**00195]** When the second round of training is performed on the first model, the first network device may adjust the first correction parameter according to a value (i.e., an adjustment step size of the correction parameter) predefined by the protocol to acquire the second correction parameter. In this way, the first network device may determine the label information of each data in the data set according to the second correction parameter to train the first model.

[**00196]** The first network device may continue adjusting the correction parameter based on the value (i.e., the adjustment step size of the correction parameter) predefined by the protocol and perform multiple rounds of training on the first model until the first model meets the actual demand.

[**00197]** It should be notes that the first correction parameter and the second correction parameter may be correction parameters for different training processes. The training process may use a third correction parameter, a fourth correction parameter and the like, which are not described exhaustively in the embodiments of the present disclosure. The first correction parameter may be different from the second correction parameter, and the first correction parameter and the second correction parameter may be determined in different ways.

[**00198]** Exemplarily, the error between the actual position of the first PRU and the estimated position of the first PRU is 10 meters, the first correction parameter may be determined to be 2 meters in the first round of training according to the characteristic information of the first PRU and UE 1, and the first network device can use the first correction parameter to correct the label information of the terminal device to be corrected to acquire the first model by training. In the second round of training, the first network device may continue calculating the error between the actual position of the first PRU and the estimated position of the first PRU, and if the positioning accuracy of the first model needs to be improved, the first network device may adjust the correction parameter to acquire the second correction parameter, and the second correction parameter may be 3 meters. In this way, the first network device can continue correcting the label information of the terminal device to be corrected by using the correction parameter, and acquire the first model by training. The training is performed circularly until the positioning accuracy reaches the first accuracy. In this way, the correction parameter can be adaptively adjusted so that the accuracy of the first model meets the requirements of the positioning accuracy.

[**00199]** In summary, in the embodiment of the present disclosure, the first network device may gradually adjust the correction parameter according to the training result of the first model, and gradually improve the processing accuracy/the positioning accuracy of the first model.

[**00200]** In an embodiment of the present disclosure, the first network device may transmit to the second terminal device one or more of the correction parameter, the data set, the label information corresponding to each data in the data set and the first model.

[**00201]** It is understood that the first network device may transmit relevant parameters in the process of training the first model to the second terminal device.

[**00202]** In a possible implementation, the second terminal device may implement the training of the first model. In this scenario, the first network device may collect measurement information of a plurality of terminal devices in the network to construct the data set, and determine the correction parameter. The first network device may transmit the data set and the correction parameter to the second terminal device, and the second terminal device may train the first model based on the data set and the correction parameter. Alternatively, the first network device may determine the label information corresponding to each data in the data set according to the correction parameter, and directly transmit the data set and the label information corresponding to each data in the data set to the second terminal device, and the second terminal device can train the first model. In this way, the first network device can directly send the data set, and the label information or the correction parameter of each data in the data set to the second terminal device, thereby reducing the complexity of the second terminal device in the data collection phase.

[**00203]** In another possible implementation, the second terminal device may not train the first model, and the first network device may collect the data set of the first model and train the first model. In this scenario, the first network device may transmit the trained first model to the second terminal device. In this way, the second terminal device can directly deploy the first model and perform positioning by using the first model. Since model training takes up a lot of processing resources, the collection of the data set and the training of the first model through the first network device can reduce the complexity of the terminal device and reduce the power consumption of the terminal device.

[**00204]** Optionally, the first network device may transmit the above-described related information to the second terminal device through an LTE Positioning Protocol (LPP). Alternatively, the first network device may transmit the above related information to the second network device, and the second network device may further forward the related information to the first terminal device through higher layer signaling, physical layer signaling or dedicated signaling.

[**00205]** In the embodiment of the present disclosure, the first network device may actively transmit the above-described information to the second terminal device, and the first network device may transmit the above-described information to the second terminal device in response to a request from the second terminal device.

[**00206]** Optionally, the first network device receives request information sent by the second terminal device, and the request information is used for requesting one or more of the correction parameter, the data set, the label information corresponding to each data in the data set and the first model.

[**00207]** The second terminal device may forward the request information to the first network device through the second network device, and the second terminal device may directly transmit the request information to the first network device through the LPP, which is not limited in the embodiment of the present disclosure.

[**00208]** To sum up, in the embodiment of the present disclosure, the correction parameter may be used to improve the accuracy of label information of each data in the data set, thereby improving the reliability of the data set in training the model training, and further improving the positioning accuracy of the model.

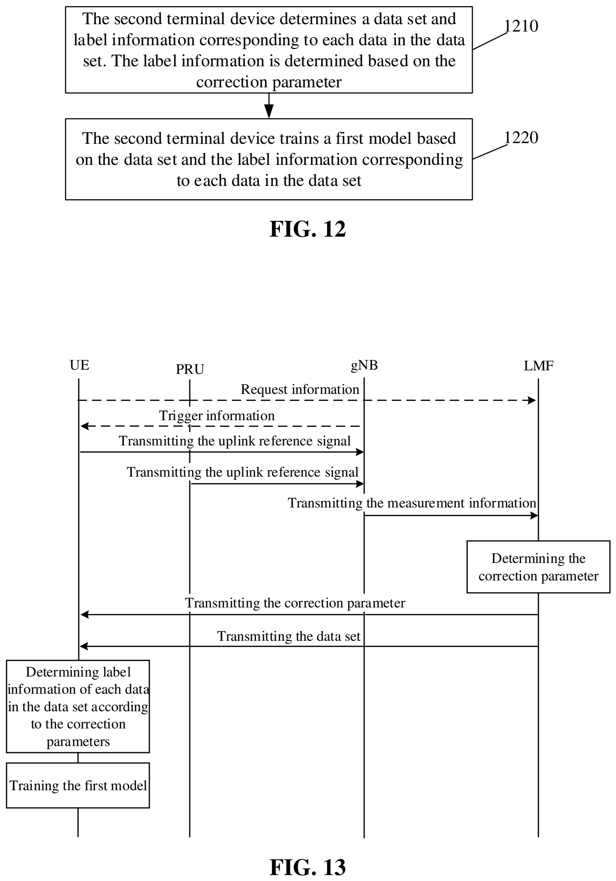

[**00209]** Based on the same inventive concept as described above, the embodiment of the present disclosure further provides a method for acquiring label information, and as shown in FIG. 12, the method for acquiring label information may include operation 1210 and operation 1220.

[**00210]** At operation 1210, the second terminal device determines a data set and label information corresponding to each data in the data set. The label information is determined based on the correction parameter.

[**00211]** At step 1220, the second terminal device trains a first model based on the data set and the label information corresponding to each data in the data set.

[**00212]** It is to be noted that the terminal device may train the first model.

[**00213]** Optionally, the data set used for training the first model and the label information corresponding to each data in the data set may be transmitted by the first network device to the second terminal device.

[**00214]** That is, the second terminal device may determine the data set for training the first model and the label information corresponding to each data in the data set according to the information transmitted by the first network device. In this way, the second terminal device may train the first model based on the received data set and the label information corresponding to each data in the data set.

[**00215]** Optionally, the data set used for training the first model may be transmitted by the first network device to the second terminal device, and the label information corresponding to each data in the data set may be determined by the second terminal device based on the correction parameter. The correction parameter may be configured by the first network device for the second terminal device.

[**00216]** That is, the second terminal device may determine the label information corresponding to each data in the data set used for training the first model according to the correction parameter transmitted by the first network device. In this way, the second terminal device can train the first model based on the received data set and the label information corresponding to each data in the data set determined by the second terminal device.

[**00217]** Thus, the second terminal device can train the first model using the corrected label information, thereby improving the reliability of the data set used for training the first model, and improving the positioning accuracy of the first model.

[**00218]** In an embodiment of the present disclosure, the operation 1210 that the second terminal device determines the data set and the label information corresponding to each data in the data set may be implemented in the following operation.

[**00219]** The second terminal device receives the data set and the label information corresponding to each data in the data set sent by the first network device. The label information corresponding to each data in the data set is determined by the first network device based on the correction parameter.

[**00220]** It can be understood that t the data set and the label information corresponding to each data in the data set may be determined by the first network device and sent to the second terminal device. That is, the second terminal device may determine the data set for training the first model and the label information corresponding to each data in the data set according to the information transmitted by the first network device.

[**00221]** In the embodiment of the present disclosure, the second terminal device may train the first model by using the received data set and the received label information corresponding to each data in the data set.

[**00222]** It can be seen that the model training will occupy a lot of processing resources, the collection of the data set and the training of the first model through the first network device can reduce the complexity of the terminal device and reduce the power consumption of the terminal device.

[**00223]** In another embodiment of the present disclosure, the operation 1210 that the second terminal device determines the data set and the label information corresponding to each data in the data set may be implemented through the following operations.

[**00224]** The second terminal device receives the correction parameter and the data set sent by the first network device.

[**00225]** The second terminal device determines the label information corresponding to each data in the data set based on the correction parameter.

[**00226]** It can be understood that the data set used for training the first model may be transmitted by the first network device to the second terminal device, and the label information corresponding to each data in the data set may be determined by the second terminal device based on the correction parameter. It should be noted that the correction parameter may be configured by the first network device for the second terminal device.

[**00227]** The first network device may transmit the data set and the correction parameter to the second terminal device, and the second terminal device may determine label information corresponding to each data in the data set based on the received correction parameter, and train the first model based on the data set and the label information corresponding to each data in the data set.

[**00228]** It should be noted that the correction parameter may be determined by the first network device according to one or more of the following manners. The correction parameter is determined by the preset rule, or the correction parameter is predefined by the protocol, or the correction parameter is configured by another network device, or the correction parameter is reported by the first terminal device. The determination of the correction parameter is the same as that described in the above-described embodiment, and will not be repeatedly described here for the sake of simplicity.

[**00229]** It can be seen that the first network device can directly send the data set and the correction parameter to the second terminal device, which can reduce the complexity of the second terminal device in the data collection phase.

[**00230]** It should be noted that the above correction parameter, the data set, and the label information corresponding to each data in the data set may be transmitted by the first network device to the second terminal device, or may be requested by the second terminal device from the first network device.

[**00231]** In some embodiments, the second terminal device transmits request information to the first network device, and the request information is used for requesting one or more of the correction parameter, the data set, the label information corresponding to each data in the data set and the first model.

[**00232]** Optionally, the second terminal device may forward the request information to the first network device through the second network device, and the second terminal device may directly send the request information to the first network device through the LPP, which is not limited in the embodiment of the present disclosure.

[**00233]** It should be noted that the data set for training the first model may include a large amount of measurement information of the second terminal device. The second terminal device may transmit measurement information to the first network device, and/or transmit a first reference signal to the second network device, the first reference signal is used by the second network device to determine the measurement information related to the second terminal device, and the measurement information is used for constructing the data set.

[**00234]** Optionally, the measurement information comprises one or more of the CIR, the PDP, the ToA, the UL TDoA, the DL TDoA, the UL AoD, the DL AoD, the UL RTOA, the DL RSTD, the RSRP, the azimuth angle and the zenith angle.

[**00235]** It should be noted that the measurement information associated with each terminal device may be the measurement information between the respective terminal device and the second network device. The measurement information related to the terminal device may involve a single second network device or a plurality of second network devices. That is, the number of pieces of measurement information may be one or more. When the number of pieces of measurement information is more than one, the plurality of pieces of measurement information may be measurement results between the terminal device and the plurality of second network devices.

[**00236]** Optionally, the second terminal device may measure a downlink reference signal transmitted by the second network device, acquire and report measurement information to the first network device. The second terminal device may also transmit a first reference signal, and the second network device can measure the first reference signal, acquire and report measurement information to the first network device. In this way, the first network device may construct the data set according to the measurement information reported by the second terminal device and the second network device.

[**00237]** It should be noted that the first reference signal may be an uplink reference signal.

[**00238]** In an embodiment of the present disclosure, before the second terminal device transmits the measurement information to the first terminal device and/or the second terminal device, the method further includes the following operation.

[**00239]** The second terminal device receives trigger information, and the trigger information is used for triggering transmitting the measurement information to the first network device, and/or transmitting the first reference signal to the second network device.

[**00240]** Optionally, the trigger information includes a reference signal type and/or a measurement type. The reference signal type comprises one or more of a PRS, an SSB and an SRS. The first reference signal comprises the SRS.

[**00241]** Optionally, the measurement type may include any of periodic measurement, aperiodic measurement, semi-persistent measurement and time window measurement.

[**00242]** Exemplarily, in a scenario in which the first model is deployed in the second terminal device, if the positioning method adopts an uplink positioning technology, an example of the flowchart is shown in FIG. 13. It should be noted that the dotted line in FIG. 13 indicates an optional operation. Referring to FIG. 13, the first network device is the LMF, the second network device is the gNB, the first terminal device is the PRU, and the second terminal device is the UE. The UE may send request information to the LMF to request the data set for training the first model. After receiving the request information, the LMF may transmit the trigger information to the PRU and the UE to trigger the PRU and the UE to transmit the uplink reference signal (e.g., SRS) to the gNB. The gNB may measure the uplink reference signal transmitted by the UE/PRU. The gNB may report the measurement information to the LMF, which may include one or more of the CIR, the PDP, the ToA, the UL TDoA, the UL AoD, the UL RTOA, the RSRP, the azimuth angle and the zenith angle. Further, the LMF may determine the correction parameter and transmit the determined correction parameter and the data set to the UE. In this way, the UE may determine the label information corresponding to each data in the data set according to the correction parameter, and further the UE may train the first model based on the data set and the label information corresponding to each data in the data set.

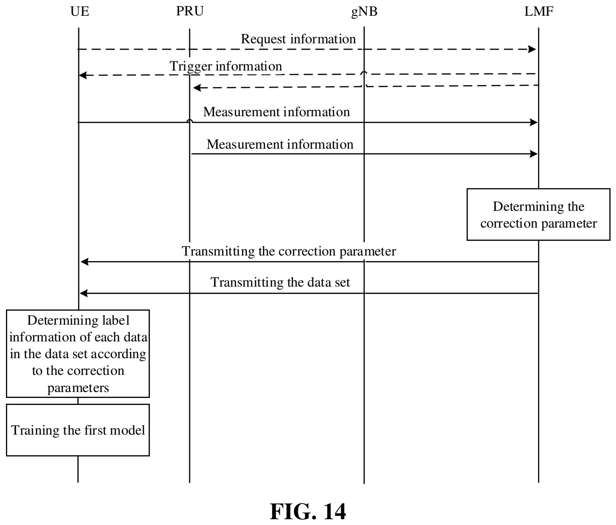

[**00243]** Further, in a scenario in which the first model is deployed in the second terminal device, if the positioning method adopts the downlink positioning technology, an example of the flowchart is shown in FIG. 14. It should be noted that the dotted line in FIG. 14 indicates an optional operation. Referring to FIG. 14, the first network device is the LMF, the second network device is the gNB, the first terminal device is the PRU, and the second terminal device is the UE. The UE may send request information to the LMF to request the data set for training the first model. After receiving the request information, the LMF may transmit the trigger information to the PRU and the UE, and the trigger information may trigger the UE and the PRU to measure a downlink reference signal (e.g., PRS and/or SSB) transmitted by the gNB. The UE and the PRU report measurement information acquired by measuring the downlink reference signal to the LMF, including one or more of the CIR, the PDP, the ToA, the DL TDoA, the DL AoD, the DL RSTD, the RSRP, the azimuth angle and the zenith angle. Further, the LMF may determine the correction parameter and transmit the determined correction parameter and the data set to the UE. In this way, the UE may determine the label information corresponding to each data in the data set according to the correction parameter, and further, the UE may train the first model based on the data set and the label information corresponding to each data in the data set.

[**00244]** To sum up, in the embodiment of the present disclosure, the correction parameter may be adopted to improve the accuracy of label information of each data in the data set, thereby improving the reliability of the data set for model training, and further improving the positioning accuracy of the model.

[**00245]** The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described embodiments may be combined in any suitable manner without contradiction, and various possible combinations will not be described separately in the present disclosure in order to avoid unnecessary repetition. For example, various embodiments of the present disclosure may be combined arbitrarily, as long as the combination do not contradict the idea of the present disclosure, they should also be regarded as the disclosure of the present disclosure. For another example, on the premise that there is no conflict, various embodiment described in the present disclosure and/or the technical features in various embodiment may be arbitrarily combined with the prior art, and the technical solution obtained after the combination should also fall within the scope of protection of the present disclosure.

[**00246]** It should also be understood that in various method embodiments of the present disclosure, the serial numbers of the above-described processes do not mean an execution sequence, and the execution sequence of the processes should be determined by the function and internal logic thereof, and should not constitute any limitation on the implementation of the embodiments of the present disclosure.

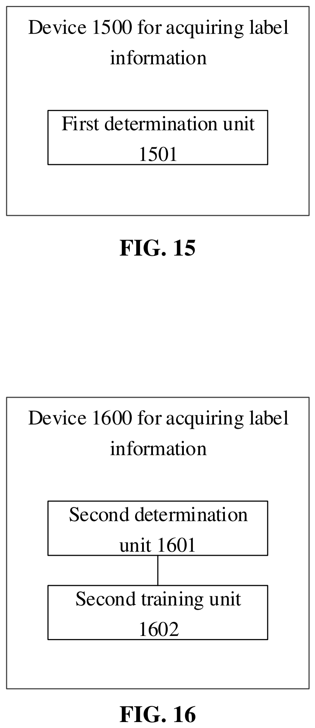

[**00247]** FIG. 15 is a schematic structural composition diagram of a device 1500 for acquiring label information according to an embodiment of the present disclosure, and the device is applied to a first network device. As shown in FIG. 15, the device 1500 for acquiring label information includes a first determination unit 1501.

[**00248]** The first determination unit 1501 is configured to determine a correction parameter, and determine label information corresponding to each data in the data set based on the correction parameter. The data set and the label information corresponding to each data in the data set are used to train a first model.

[**00249]** Optionally, the correction parameter is determined based on an error value between actual information and estimated information of the first terminal device.

[**00250]** Optionally, the number of the first terminal devices are more than one, and the correction parameter is determined based on an average value of error values between the actual information and the estimated information of the plurality of first terminal devices.

[**00251]** Optionally, the correction parameter is determined based on an error value between the actual information and the estimated information of the first terminal device and a first proportional parameter. The first proportional parameter is used to characterize a positional relationship between the first terminal device and a second terminal device. The second terminal device is associated with at least part of data in the data set.

[**00252]** Optionally, the first proportional parameter is greater than or equal to a first threshold.

[**00253]** Optionally, the first proportional parameter is determined based on characteristic information of the first terminal device and characteristic information of the second terminal device.

[**00254]** Optionally, the characteristic information includes one or more of channel information, measurement information, a power of a first path, a channel impulse response and spatial consistency information.

[**00255]** Optionally, the correction parameter is determined based on one or more of the following manners. The correction parameter is predefined by the protocol, the correction parameter is configured by another network device, or the correction parameter is reported by the first terminal device

[**00256]** Optionally, the label information is position information, the actual information includes actual position information, the estimated information includes estimated position information, and the correction parameter includes a first position correction parameter in a first direction, and/or a second position correction parameter in a second direction.

[**00257]** Optionally, the label information is an intermediate parameter related to the position. The actual information comprises actual intermediate parameters, the estimated information comprises estimated intermediate parameters. The intermediate parameter includes one or more of: a ToA, a DL TDoA, a DL AoD, a DL RSTD an RSRP and a LOS/NLOS identification result.

[**00258]** Optionally, the device for acquiring the label information further includes an acquisition unit configured to acquire measurement information related to the terminal device, the measurement information is used to construct the data set. The terminal device includes a first terminal device and/or a second terminal device.

[**00259]** Optionally, the measurement information comprises one or more of a CIR, a PDP, a ToA, a UL TDoA, a DL TDoA, a UL AoD, a DL AoD, a UL RTOA, a DL RSTD, an RSRP, an azimuth angle and a zenith angle.

[**00260]** Optionally, the device for acquiring the label information further comprises a first transceiver unit configured to transmit trigger information for triggering one or more of the second network device, the first terminal device and the second terminal device to transmit the measurement information.

[**00261]** Optionally, the trigger information includes a reference signal type and/or a measurement type.

[**00262]** Optionally, the reference signal type includes one or more of a PRS, an SSB and an SRS.

[**00263]** Optionally, the measurement type includes any of periodic measurement, aperiodic measurement, semi-persistent measurement and time window measurement.

[**00264]** Optionally, the measurement information transmitted by the first terminal device and/or the second terminal device includes one or more of the CIR, the PDP, the ToA, the DL TDoA, the DL AoD, the DL RSTD, the RSRP, the azimuth angle and the zenith angle.

[**00265]** The measurement information transmitted by the second network device includes one or more of the CIR, the PDP, the ToA, the UL TDoA, the UL AoD, the UL RTOA, the RSRP, the azimuth angle and the zenith angle.

[**00266]** Optionally, the device for acquiring label information further includes a first training unit configured to train the first model based on the data set and the label information corresponding to each data in the data set.

[**00267]** Optionally, the first determination unit 1501 is configured to re-determine the correction parameter in case that the accuracy of the first model is less than the first accuracy, and update label information corresponding to each data in the data set based on the re-determined correction parameter. The updated label information is used to continue training the first model until the accuracy of the first model is greater than or equal to the first accuracy.

[**00268]** Optionally, the first transceiver unit is further configured to transmit to the second terminal device one or more of the correction parameter, the data set, the label information corresponding to each data in the data set and the first model.

[**00269]** Optionally, the first transceiver unit is further configured to receive request information transmitted by the second terminal device, and the request information is used for requesting one or more of the correction parameter, the data set, the label information corresponding to each data in the data set and the first model.

[**00270]** Optionally, the first network device is a core network device, the second network device is an access network device, and the first terminal device is a terminal device with known actual information.

[**00271]** Those skilled in the art should understand that the related description of the above-described device for acquiring label information according to the embodiment of the present disclosure can be understood with reference to the related description of the method for acquiring label information according to the embodiment of the present disclosure.

[**00272]** FIG. 16 is a schematic structural composition diagram of a device 1600 for acquiring label information according to an embodiment of the present disclosure, and the device is applied to a second terminal device. As shown in FIG. 16, the device 1600 for acquiring label information includes a second determination unit 1601 and a second training unit 1602.

[**00273]** The second determination unit 1601 is configured to determine a data set and label information corresponding to each data in the data set. The label information is determined based on a correction parameter.

[**00274]** The second training unit 1602 is configured to train a first model based on the data set and the label information corresponding to each data in the data set.

[**00275]** Optionally, the device 1600 for acquiring label information further includes a second transceiver unit configured to receive the data set and the label information corresponding to each data in the data set sent by the first network device. The label information corresponding to each data in the data set is determined by the first network device based on the correction parameter.

[**00276]** Optionally, the second transceiver unit is further configured to receive the correction parameter and the data set transmitted by the first network device.

[**00277]** The second determination unit 1601 is further configured to determine the label information corresponding to each data in the data set based on the correction parameter.

[**00278]** Optionally, the second transceiver unit is further configured to transmit request information to the first network device, and the request information is used for requesting one or more of the correction parameter, the data set, the label information corresponding to each data in the data set and the first model.

[**00279]** Optionally, the second transceiver unit is further configured to transmit measurement information to the first network device and/or to transmit a first reference signal to the second network device. The first reference signal is used by the second network device to determine measurement information related to the second terminal device, and the measurement information is used for constructing the data set.

[**00280]** Optionally, the measurement information comprises one or more of a CIR, a PDP, a ToA, a UL TDoA, a DL TDoA, a UL AoD, a DL AoD, a UL RTOA, a DL RSTD, an RSRP, an azimuth angle and a zenith angle.

[**00281]** Optionally, the second transceiver unit is further configured to receive trigger information used for triggering transmitting measurement information to the first network device and/or transmitting the first reference signal to the second network device.

[**00282]** Optionally, the trigger information includes a reference signal type and/or a measurement type.

[**00283]** Optionally, the reference signal type includes one or more of a PRS, an SSB and an SRS. The first reference signal includes the SRS.

[**00284]** Optionally, the measurement type includes any of periodic measurement, aperiodic measurement, semi-persistent measurement and time window measurement.

[**00285]** Optionally, the first network device is a core network device, and the second network device is an access network device.

[**00286]** Those skilled in the art should understand that the related description of the above-described device for acquiring label information according to the embodiment of the present disclosure can be understood with reference to the related description of the method for acquiring label information according to the embodiment of the present disclosure.

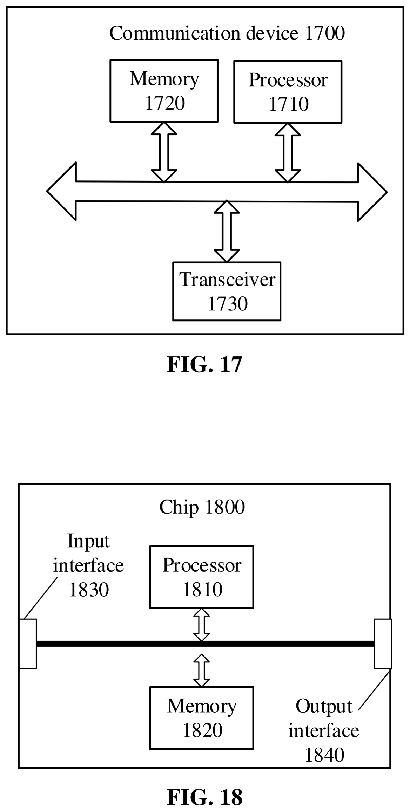

[**00287]** FIG. 17 is a schematic structural diagram of a communication device 1700 according to an embodiment of the present disclosure. The electronic device may be a network device or a terminal device. The communication device 1700 shown in FIG. 17 includes a processor 1710 that may invoke and execute a computer program from a memory to implement the method in the embodiment of the present disclosure.

[**00288]** Optionally, as shown in FIG. 17, the communication device 1700 may further include a memory 1720. The processor 1710 may invoke and execute a computer program from the memory 1720 to implement the method in the embodiment of the present disclosure.

[**00289]** The memory 1720 may be a separate device independent of the processor 1710 or may be integrated into the processor 1710.

[**00290]** Optionally, the communication device 1700 may be the first network device according to the embodiment of the present disclosure, and the communication device 1700 may implement flows implemented by the first network device in each method according to the embodiment of the present disclosure, and the flows are not repeated here for the sake of brevity.

[**00291]** Optionally, the communication device 1700 may be the second terminal device according to the embodiment of the present disclosure, and the communication device 1700 may implement the flows implemented by the second terminal device in each method according to the embodiment of the present disclosure, and the flows will not be described herein for the sake of conciseness.

[**00292]** FIG. 18 is a schematic structural diagram of a chip according to an embodiment of the present disclosure. The chip 1800 shown in FIG. 18 includes a processor 1810, which can invoke and execute a computer program from a memory to implement the method in the embodiment of the present disclosure.

[**00293]** Optionally, as shown in FIG. 18, the chip 1800 may further include a memory 1820. The processor 1810 may invoke and execute a computer program from the memory 1820 to implement the method in the embodiment of the present disclosure.

[**00294]** The memory 1820 may be a separate device independent of the processor 1810 or may be integrated into the processor 1810.

[**00295]** Optionally, the chip 1800 may further include an input interface 1830. The processor 1810 may control the input interface 1830 to communicate with other devices or chips. Specifically, the processor may control the input interface to acquire information or data transmitted by other devices or chips.

[**00296]** Optionally, the chip 1800 may further include an output interface 1840. The processor 1810 may control the output interface 1840 to communicate with other devices or chips. Specifically, the processor may control the output interface to output information or data to other devices or chips.

[**00297]** Optionally, the chip may be applied to the first network device in the embodiment of the present disclosure, and the chip can implement the flows implemented by the first network device in each method of the embodiment of the present disclosure, and the flows are not be repeatedly described here for the sake of brevity.

[**00298]** Optionally, the chip may be applied to the second terminal device in the embodiment of the present disclosure, and the chip can implement the flows implemented by the second terminal device in each method of the embodiment of the present disclosure, and the flows are not be repeatedly described here for the sake of brevity.

[**00299]** It should be understood that the chip mentioned in the embodiments of the present disclosure may also be referred to as a system-level chip, a system chip, a chip system, a system-on-chip chip or the like.

[**00300]** It should be understood that the processor in the embodiment of the present disclosure may be an integrated circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or a transistor logic device, or a discrete hardware component, to implement or execute the methods, steps, and logical block diagrams disclosed in the embodiments of the present disclosure. The general-purpose processor may be a microprocessor or the processor may be any conventional processor or the like. The steps of the method disclosed in connection with the embodiments of the present disclosure may be directly be executed by a hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and implements the steps of the above method in combination with the hardware thereof.

[**00301]** It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a direct rambus RAM (DR RAM). It should be noted that the memory of the systems and methods described herein is intended to include, but is not limited to, these and any other suitable type of memory.

[**00302]** It should be understood that the above memory is illustrative rather than restrictive. For example, the memory in the embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM), and the like. That is, the memory in the embodiments of the present disclosure is intended to include, but is not limited to, these and any other suitable type of memory.

[**00303]** The embodiments of the present disclosure further provide a computer-readable storage medium for storing a computer program.

[**00304]** Optionally, the computer-readable storage medium may be applied to the first network device in the embodiment of the present disclosure, and the computer program causes a computer to execute the flows implemented by the first network device in each method of the embodiments of the present disclosure, and the flows are not repeated here for the sake of brevity.

[**00305]** Optionally, the computer-readable storage medium may be applied to the second terminal device in the embodiment of the present disclosure, and the computer program causes the computer to execute the flows implemented by the second terminal device in each method in the embodiments of the present disclosure, and the description of the flows are not repeated here for the sake of brevity.

[**00306]** The embodiments of the present disclosure further provide a computer program product including computer program instructions.

[**00307]** Optionally, the computer program product may be applied to the first network device in the embodiment of the present disclosure, and the computer program instructions cause a computer to execute the flows implemented by the first network device in each method in the embodiments of the present disclosure, and the description of the flows is not repeated here for the sake of brevity.

[**00308]** Optionally, the computer program product may be applied to the second terminal device in the embodiment of the present disclosure, and the computer program instructions cause the computer to execute the flows implemented by the second terminal device in each method in the embodiments of the present disclosure, and the description of the flows are not repeated here for the sake of brevity.

[**00309]** The embodiments of the present disclosure further provide a computer program.

[**00310]** Optionally, the computer program may be applied to the first network device in the embodiments of the present disclosure, and the computer program, when run on the computer, enables the computer to execute the flows implemented by the first network device in each method of the embodiments of the present disclosure, and the description of the flows is not repeated here for the sake of brevity.

[**00311]** Optionally, the computer program may be applied to the second terminal device in the embodiments of the present disclosure, and the computer program, when run on the computer, enables the computer to execute the flows implemented by the second terminal device in each method of the embodiments of the present disclosure, and the flows are not repeated here for the sake of brevity.

[**00312]** Those of ordinary skill in the art will appreciate that the units and the algorithmic steps of the various examples described in connection with the embodiments disclosed herein may be implemented in electronic hardware, or a combination of computer software and electronic hardware. Whether these functions are executed in hardware or software depends on the specific application and design constraints of the technical solution. Those skilled in the art may use different methods for implementing the described functions for each particular application, but such implementations should not be considered beyond the scope of the present disclosure.

[**00313]** Those skilled in the art can clearly understand that, for convenience and conciseness of the description, regarding the specific operation processes of the systems, devices, and units described above, reference may be made to the corresponding processes in the aforementioned method embodiments, and the specific operation processes of the systems, devices, and units described above are not repeated here.

[**00314]** In several embodiments provided herein, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

[**00315]** The units described as separate units may or may not be physically separate, and the units displayed as units may or may not be physical units, that is, the units may be located in the same place or may be distributed over a plurality of network units. Some or all of the units may be selected according to actual needs to achieve the purpose of the solution of the present embodiment.

[**00316]** In addition, all of the functional units in each embodiment of the present disclosure may be integrated in one processing unit, or each functional unit may be physically present alone, or two or more units may be integrated into one unit.

[**00317]** The functions may be stored in a computer-readable storage medium if implemented in the form of software functional units and sold or used as independent products. Based on this understanding, the technical solution of the present disclosure essentially or a part of the technical solution that contributes to the prior art or a part of the technical solution may be embodied in the form of a software product, the computer software product is stored in a storage medium, includes several instructions for causing a computer device (which may be a personal computer, server, or network device, etc.) to perform all or a part of the steps of the method described in various embodiments of the present disclosure. The storage medium includes a USB disk, a removable hard disk, a Read-Only Memory (ROM), a Random Access Memory (RAM), a magnetic disk, an optical disk or various mediums that can store a program code.

[**00318]** The foregoing are merely specific embodiments of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A method for acquiring label information, comprising:
determining, by a first network device, a correction parameter; and
determining, by the first network device, label information corresponding to each data in a data set based on the correction parameter, wherein the data set and the label information corresponding to each data in the data set are used to train a first model.

2. The method of claim 1, wherein,
the correction parameter is determined based on an error value between actual information and estimated information of a first terminal device.

3. The method of claim 2, wherein a number of the first terminal device is more than one,
the correction parameter is determined based on an average value of error values between actual information and estimated information of the plurality of the first terminal devices.

4. The method of any one of claims 1 to 3, wherein the correction parameter is determined based on an error value between actual information and estimated information of a first terminal device, and a first proportional parameter, the first proportional parameter is used to characterize a positional relationship between the first terminal device and a second terminal device, and the second terminal device is associated with at least part of data in the data set.

5. The method of claim 4, wherein the first proportional parameter is greater than or equal to a first threshold.

6. The method according to claim 4 or 5, wherein the first proportional parameter is determined based on characteristic information of the first terminal device and characteristic information of the second terminal device.

7. The method of claim 6, wherein the characteristic information comprises one or more of:
channel information, measurement information, a power of a first path, a channel impulse response and a spatial consistency information.

8. The method of claim 1, wherein the correction parameter is determined based on one or more of following manners:
the correction parameter is predefined by a protocol;
the correction parameter is configured by another network device; and
the correction parameter is reported by a first terminal device.

9. The method of any one of claims 1 to 8, wherein the label information is position information, the actual information comprises actual position information, the estimated information comprises estimated position information, the correction parameter comprises a first position correction parameter in a first direction and/or a second position correction parameter in a second direction.

10. The method of any one of claims 1 to 8, wherein the label information is an intermediate parameter related to a position, the actual information comprises an actual intermediate parameter, and the estimated information comprises an estimated intermediate parameter, wherein the intermediate parameter comprises one or more of:
a Time of Arrival (ToA), an Uplink Time Difference of Arrival (UL TdoA), a Downlink time Difference of Arrival (DL TDoA), an Uplink Angle-of-Departure (UL AoD), a Downlink Angle-of-Departure (DL AoD), an UL Relative Time of Arrival (UL RTOA), a DL Reference Signal Time Difference (DL RSTD), a Reference Signal Receiving Power (RSRP) and a Line of Sight (LOS)/Non Line Of Sight (NLOS) identification result.

11. The method of any one of claims 1 to 10, further comprising:
acquiring, by the first network device, measurement information related to a terminal device, wherein the measurement information is used to construct the data set, and the terminal device comprises a first terminal device and/or the second terminal device.

12. The method of claim 11, wherein the measurement information comprises one or more of:
a Channel Impulse Response (CIR), a Power Delay Profile (PDP), a Time of Arrival (ToA), an Uplink Time Difference of Arrival (UL TdoA), a Downlink time Difference of Arrival (DL TDoA), an Uplink Angle-of-Departure (UL AoD), a Downlink Angle-of-Departure (DL AoD), an UL Relative Time of Arrival (UL RTOA), a DL Reference Signal Time Difference (DL RSTD), a Reference Signal Receiving Power (RSRP), an azimuth angle and a zenith angle.

13. The method of claim 11, further comprising: before the acquiring, by the first network device, measurement information related to a terminal device,
transmitting, by the first network device, trigger information for triggering one or more of a second network device, the first terminal device and the second terminal device, to transmit the measurement information.

14. The method of claim 13, wherein the trigger information comprises a reference signal type and/or a measurement type.

15. The method of claim 14, wherein the reference signal type comprises one or more of:
a Positioning Reference Signal (PRS), a Synchronization Signal Block (SSB) and a Sounding Reference Signal (SRS).

16. The method of claim 14, wherein the measurement type comprises any one of:
periodic measurement, aperiodic measurement, semi-persistent measurement, and time window measurement.

17. The method of any one of claims 13 to 16, wherein the measurement information transmitted by the first terminal device and/or the second terminal device comprises one or more of:
a Channel Impulse Response (CIR), a Power Delay Profile (PDP), a Time of Arrival (ToA), a Downlink time Difference of Arrival (DL TDoA), a Downlink Angle-of-Departure (DL AoD), a DL Reference Signal Time Difference (DL RSTD), a Reference Signal Receiving Power (RSRP), an azimuth angle and a zenith angle,
the measurement information transmitted by the second network device comprises one or more of:
a CIR, a PDP, a ToA, an Uplink Time Difference of Arrival (UL TdoA), an Uplink Angle-of-Departure (UL AoD), an UL Relative Time of Arrival (UL RTOA), an RSRP, the azimuth angle and the zenith angle.

18. The method of any one of claims 1 to 17, further comprising:
training, by the first network device, the first model based on the data set and the label information corresponding to each data in the data set.

19. The method of claim 18, further comprising:
re-determining a correction parameter in case that accuracy of the first model is less than a first accuracy, and updating the label information corresponding to each data in the data set based on the re-determined correction parameter, wherein the updated label information is used to continue training the first model until the accuracy of the first model is greater than or equal to the first accuracy.

20. The method of any one of claims 1 to 19, further comprising:
transmitting, by the first network device to a second terminal device, one or more of:
the correction parameter, the data set, the label information corresponding to each data in the data set and the first model.

21. The method of claim 20, further comprising:
receiving, by the first network device, request information sent by the second terminal device, wherein the request information is used for requesting one or more of the correction parameter, the data set, the label information corresponding to each data in the data set and the first model.

22. The method of any one of claims 1 to 20, wherein
the first network device is a core network device, the second network device is an access network device, and the first terminal device is a terminal device of which actual information is known.

23. A method for acquiring label information of a data set, comprising:
determining, by a second terminal device, a data set and label information corresponding to each data in the data set, wherein the label information is determined based on a correction parameter; and
training, by the second terminal device, a first model based on the data set and the label information corresponding to each data in the data set.

24. The method of claim 23, wherein the determining, by a second terminal device, a data set and label information corresponding to each data in the data set comprising:
receiving, by the second terminal device, a data set and label information corresponding to each data in the data set sent by a first network device, wherein the label information corresponding to each data in the data set is determined by the first network device based on the correction parameter.

25. The method of claim 23, wherein the determining, by a second terminal device, a data set and label information corresponding to each data in the data set comprising:
receiving, by the second terminal device, the correction parameter and the data set sent by the first network device; and
determining, by the second terminal device, the label information corresponding to each data in the data set based on the correction parameter.

26. The method of any one of claims 23 to 25, further comprising:
transmitting, by the second terminal device, request information to the first network device, wherein the request information is used to request one or more of the correction parameter, the data set, the label information corresponding to each data in the data set and the first model.

27. The method of any one of claims 23 to 26, further comprising:
transmitting, by the second terminal device, measurement information to the first network device, and/or transmitting a first reference signal to a second network device, wherein the first reference signal is used by the second network device to determine measurement information related to the second terminal device, and the measurement information is used for constructing the data set.

28. The method of claim 27, wherein the measurement information comprises one or more of:
a Channel Impulse Response (CIR), a Power Delay Profile (PDP), a Time of Arrival (ToA), an Uplink Time Difference of Arrival (UL TdoA), a Downlink time Difference of Arrival (DL TDoA), an Uplink Angle-of-Departure (UL AoD), a Downlink Angle-of-Departure (DL AoD), an UL Relative Time of Arrival (UL RTOA), a DL Reference Signal Time Difference (DL RSTD), a Reference Signal Receiving Power (RSRP), an azimuth angle and a zenith angle.

29. The method of claim 27 or 28, further comprising: before the transmitting, by the second terminal device, measurement information to the first terminal device and/or the second terminal device,
receiving, by the second terminal device, trigger information for triggering transmitting the measurement information to the first network device and/or transmitting the first reference signal to the second network device.

30. The method of claim 29, wherein the trigger information comprises a reference signal type and/or a measurement type.

31. The method of claim 30, wherein the reference signal type comprises one or more of:
a Positioning Reference Signal (PRS), a Synchronization Signal Block (SSB) and a Sounding Reference Signal (SRS), wherein the first reference signal comprises the SRS.

32. The method of claim 30, wherein the measurement type comprises any one of:
periodic measurement, aperiodic measurement, semi-persistent measurement and time window measurement.

33. The method of any one of claims 23 to 32, wherein the first network device is a core network device and the second network device is an access network device.

34. A device for acquiring label information applied to a first network device, comprising:
a first determination unit configured to determine a correction parameter, and determine label information corresponding to each data in the data set based on the correction parameter, wherein the data set and the label information corresponding to each data in the data set are used to train a first model.

35. A device for acquiring label information applied to a second terminal device, comprising:
a second determination unit configured to determine a data set and label information corresponding to each data in the data set, wherein the label information is determined based on a correction parameter; and
a second training unit configured to train a first model based on the data set and the label information corresponding to each data in the data set.

36. A network device comprising: a memory, a processor and a transceiver,
the transceiver is configured for communication with a terminal device;
the memory stores a computer program executable on the processor; and
the processor implements the method of any one of claims 1 to 22 when executing the program in conjunction with the transceiver.

37. A terminal device comprising a memory, a processor and a transceiver,
the transceiver is configured for communication with a terminal device;
the memory stores a computer program executable on the processor; and
the processor performs the method of any one of claims 23 to 33 when executing the program in conjunction with the transceiver.

38. A computer storage medium storing one or more programs executable by one or more processors to perform the method of any one of claims 1 to 22, or the method of any one of claims 23 to 33.

39. A chip comprising a processor for invoking and executing a computer program from a memory to enable a device on which the chip is mounted to perform the method of any one of claims 1 to 22, or the method of any one of claims 23 to 33.

40. A computer program product comprises a computer storage medium storing a computer program, the computer program comprises instructions which, when being executed by at least one processor, performs the method of any one of claims 1 to 22, or the method of any one of claims 23 to 33.

41. A computer program that causes a computer to perform the method of any one of claims 1 to 22, or the method of any one of claims 23 to 33.
